(19) Europäisches Patentamt
European Patent Office
Office européen des brevets

(11) **EP 4 343 587 B1**

(12) **EUROPEAN PATENT SPECIFICATION**

(45) Date of publication and mention
of the grant of the patent:
**14.01.2026 Bulletin 2026/03**

(21) Application number: **22899761.5**

(22) Date of filing: **28.03.2022**

(51) International Patent Classification (IPC):
**G06F 17/18** (2006.01)   **G06F 17/00** (2019.01)
**F03D 15/00** (2016.01)   **F03D 17/00** (2016.01)

(52) Cooperative Patent Classification (CPC):
**G06F 17/18; F03D 17/006; F03D 17/011;**
**F03D 17/029; F03D 17/032; F16C 17/00;**
**F16C 19/00; G01M 13/04;** F03D 80/701;
F16C 2233/00; F16C 2300/14; F16C 2360/31;
Y02E 10/72

(86) International application number:
**PCT/CN2022/083377**

(87) International publication number:
**WO 2023/097938 (08.06.2023 Gazette 2023/23)**

(54) **METHOD AND DEVICE FOR EVALUATING SERVICE LIFE OF A PITCH BEARING OF A WIND TURBINE**

VERFAHREN UND VORRICHTUNG ZUR BEWERTUNG DER LEBENSDAUER EINES BLATTLAGERS EINER WINDTURBINE

PROCÉDÉ ET DISPOSITIF D'ÉVALUATION DE LA DURÉE DE VIE D'UN ROULEMENT D'ORIENTATION D'UNE ÉOLIENNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.11.2021 CN 202111438432**

(43) Date of publication of application:
**27.03.2024 Bulletin 2024/13**

(73) Proprietor: **Beijing Goldwind Science & Creation Windpower Equipment Co. Ltd.**
**Beijing 100176 (CN)**

(72) Inventors:
• **ZHANG, Pengfei**
**Beijing 100176 (CN)**
• **SU, Huili**
**Beijing 100176 (CN)**
• **HAN, Wei**
**Beijing 100176 (CN)**
• **ZHAO, Shipei**
**Beijing 100176 (CN)**

(74) Representative: **Gulde & Partner**
**Patent- und Rechtsanwaltskanzlei mbB**
**Berliner Freiheit 2**
**10785 Berlin (DE)**

(56) References cited:
CN-A- 105 134 510   CN-A- 107 590 356
CN-A- 113 623 142   CN-A- 113 623 142
US-A1- 2010 332 153   US-A1- 2015 167 637
US-A1- 2019 048 849

**Description**

## TECHNICAL FIELD

The present disclosure relates to the field of wind power generation, and in particular to a service life evaluation method and device for a pitch bearing of a wind turbine.

## BACKGROUND

A pitch bearing of a wind turbine is an important component to connect blades with a hub, and is also used to transfer a load on the blades to a pitch system on the hub. The pitch system is an important safety system for the wind turbine, a failure of which may lead to devastating disasters. Therefore, service life evaluation for the pitch bearing during operation of the wind turbine becomes particularly important and critical.

In the related technology, a service life of a pitch bearing of an in-service wind turbine is evaluated based on a load of the pitch bearing collected by a load sensor installed. However, such solution has a long installation period and intensive capital consumption, and requires a large capital cost and time cost to achieve full coverage of all wind turbines in a wind power plant. A selection of relevant background art is given by US2015/167637A1, US2019/048849A1 and CN113623142A.

## SUMMARY

Therefore, reasonably estimating a load of a pitch bearing with parameters that may be directly acquired at present is crucial for online service life evaluation for the pitch bearing at low cost.

In a general aspect, a service life evaluation method for a pitch bearing of a wind turbine is provided. The method includes: acquiring a probability density of a pitch driving torque in M historical periods, where M is a positive integer; acquiring an angle cumulative value of a pitch angle in each of the M historical periods; determining an equivalent load of the pitch bearing based on the pitch driving torque, the probability density of the pitch driving torque in the M historical periods, and angle cumulative values in the M historical periods; and determining a consumed service life of the pitch bearing based on the equivalent load of the pitch bearing.

In another general aspect, a service life evaluation device for a pitch bearing of a wind turbine is provided. The device includes: a first acquisition unit configured to acquire a probability density of a pitch driving torque in M historical periods, and acquire an angle cumulative value of a pitch angle in each of the M historical periods, where M is a positive integer; an equivalent unit configured to determine an equivalent load of the pitch bearing based on the pitch driving torque, the probability density of the pitch driving torque in the M historical periods, and angle cumulative values in the M historical periods; and a first calculation unit configured to determine a consumed service life of the pitch bearing based on the equivalent load of the pitch bearing.

In another general aspect, a computer-readable storage medium is provided. Instructions in the computer-readable storage medium, when executed by at least one processor, cause the at least one processor to perform the service life evaluation method as described above.

In another general aspect, a computer apparatus is provided. The computer apparatus includes: at least one processor; and at least one memory configured to store computer-executable instructions, where the computer-executable instructions, when executed by the at least one processor, cause the at least one processor to perform the service life evaluation method as described above.

According to the present disclosure, a service life of a pitch bearing is evaluated by using operation data inevitably to be collected during operation of a wind turbine. No additional data is required to be collected, and thus no additional data collection sensor is required to be deployed. Therefore, a product cost can be reduced and a time cost of service life evaluation can be saved. According to the present disclosure, within an acceptable precision range, real-time online evaluation of a consumed service life and prediction of a future remaining service life can be achieved. Predictive operation and maintenance and prediction of failure events may be carried out on the premise of ensuring safe operation of the wind turbine, thereby reducing an unplanned downtime of the wind turbine and improving its economic benefit.

It should be understood that the above general descriptions and the following detailed descriptions are merely for exemplary and explanatory purposes, and are not intended to limit the present disclosure.

## BRIEF DESCRIPTION OF THE DRAWINGS

Figure 1 is a flowchart illustrating a service life evaluation method for a pitch bearing of a wind turbine according to an embodiment of the present disclosure.

Figure 2 is a schematic flowchart illustrating an online service life evaluation system for a pitch bearing according to an embodiment of the present disclosure.

Figure 3 is a schematic flowchart illustrating a system for predicting remaining service life of a pitch bearing according to an embodiment of the present disclosure.

Figure 4 is a block diagram illustrating a service life evaluation device for a pitch bearing of a wind turbine according to an embodiment of the present disclosure.

Figure 5 is a block diagram illustrating a service life evaluation device for a pitch bearing of a wind turbine according to another embodiment of the present disclosure.

Figure 6 is a block diagram illustrating a computer apparatus according to an embodiment of the present disclosure.

## DETAILED DESCRIPTION OF THE EMBODIMENTS

Specific embodiments are provided below to help readers to gain a comprehensive understanding of the method, apparatus, and/or system described herein. However, after understanding the present disclosure, various changes, modifications, and equivalents of the method, apparatus, and/or system described herein would be clear. For example, an order of operations described herein is only exemplary and but not limitary, and may be changed as would be clear after understanding the present disclosure, except for operations that must occur in a specific order. In addition, description of features known in the art may be omitted, for clarity and conciseness.

The features described herein may be implemented in different forms and should not be limited to the examples described here. On the contrary, the examples described here are provided to illustrate only some of many feasible ways for implementing the method, apparatus, and/or system described here, and many feasible ways would be clear after understanding the present disclosure.

As used herein, the term "and/or" includes any one of listed items associated with the term, and any combination of any two or more of the items.

Although terms "first," "second," "third" and the like may be used herein to describe various members, components, regions, layers, or parts, these members, components, regions, layers, or parts should not be limited by these terms. On the contrary, these terms are only used to distinguish one member, component, region, layer, or part from another member, component, region, layer, or part. Therefore, without departing from the teachings of the examples, a first member, first component, first region, first layer, or first part referred to in the examples described herein may alternatively be referred to as a second member, second component, second region, second layer, or second part.

In the specification, an element (such as a layer, region, or substrate) described as being "on", "connected to", or "bonded to" another element may be directly "on", "connected to", or "bonded to" another element, or there may be one or more other elements between the two elements. On the contrary, when an element is described as "directly on" another element, "directly connected to" or "directly bonded to" another element, there may be no other elements between the two elements.

The terms used herein are only for describing various examples and are not intended to limit the present disclosure. Unless clearly indicated in the context otherwise, a singular form is also intended to include a plural form. Terms "include", "comprise", and "have" indicate existence of a mentioned feature, quantity, operation, member, element, and/or combination thereof, but do not exclude existence or addition of one or more other features, quantities, operations, members, elements, and/or combinations thereof.

Unless otherwise defined, all terms used herein (including technical terms and scientific terms) have the same meanings as those commonly understood by those skilled in the art to which the present disclosure pertains after understanding the present disclosure. Unless explicitly defined otherwise, terms (such as those defined in a general dictionary) should be interpreted as having meanings consistent with their respective contexts in the relevant field and in the present disclosure, and should not be interpreted ideally or too formally.

In addition, in the description of the examples, detail description of well-known relevant structures or functions are omitted, when it is believed that the detailed description may lead to ambiguity of the present disclosure.

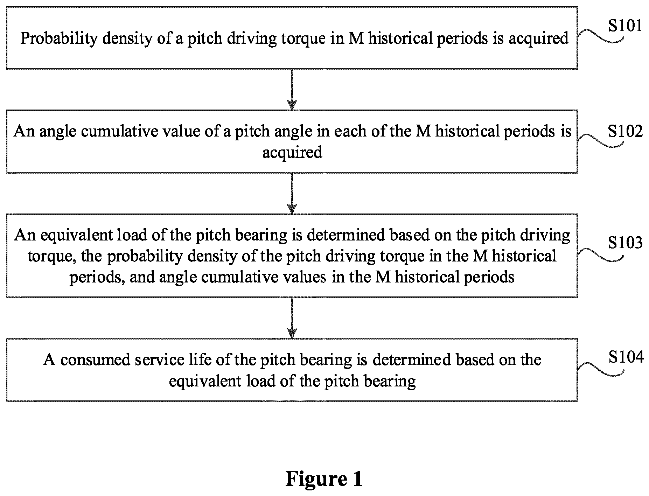

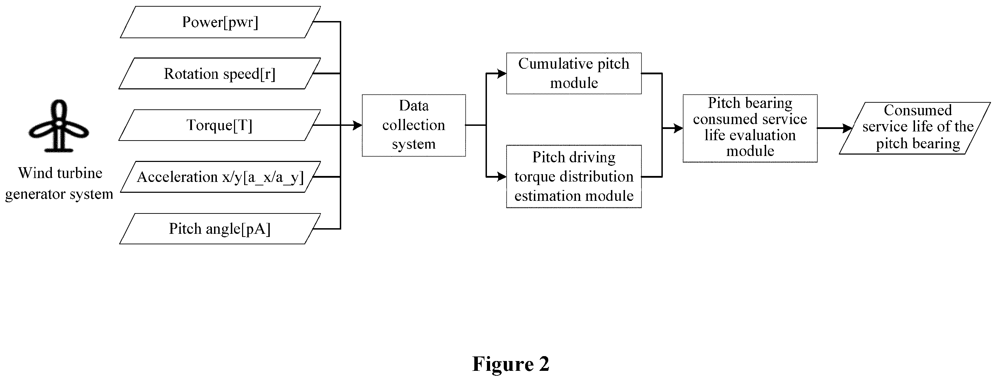

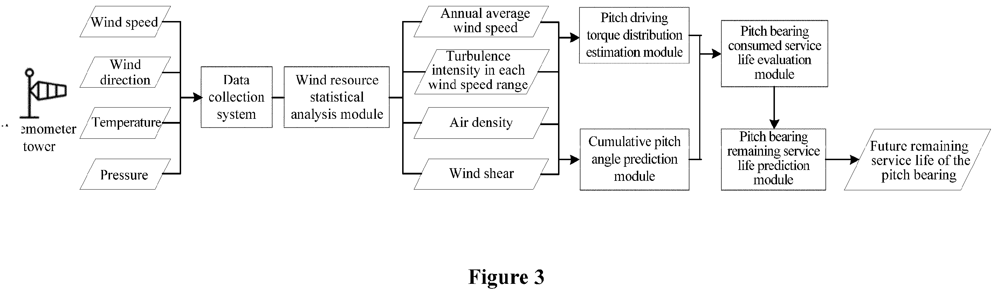

Figure 1 is a flowchart illustrating a service life evaluation method for a pitch bearing of a wind turbine according to an embodiment of the present disclosure. The method for evaluating service life may rely on a service life evaluation system, which may further include an online service life evaluation system configured to evaluate a consumed service life of the pitch bearing and a remaining service life prediction system configured to evaluate a future estimated remaining service life of the pitch bearing. Figure 2 is a schematic flowchart illustrating an online system for evaluating service life of a pitch bearing according to an embodiment of the present disclosure. Figure 3 is a schematic flowchart illustrating a system for predicting remaining service life of a pitch bearing according to an embodiment of the present disclosure.

Referring to Figure 1, in step S101, a probability density of a pitch driving torque in M historical periods is acquired, where M is a positive integer. Because the pitch driving torque may affect a loss of the pitch bearing, this parameter is selected to evaluate the service life of the pitch bearing. It should be noted that the pitch driving torque is a force that controls a rotation angle of blades. Further, the wind turbine may generally operate for several years cumulatively. Cumulative operation duration may be divided into M historical periods based on a certain step (for example, 10 minutes), and data processing may be carried out separately for each of the historical periods, to ensure the consistency of duration of a single historical period used in evaluation of different wind turbines, thus ensuring the universality of the strategy.

In an embodiment, the pitch driving torque usually changes in a certain interval. For example, for a wind turbine with rated capacity less than 5MW, a pitch driving torque is generally in an interval of [-200KNm, 200KNm]. Multiple specific numerical values may be selected from the interval. For example, multiple specific pitch driving torques are obtained based on a set step. That is, the selected multiple pitch driving torques may form an arithmetic progression. Then, a probability density of each of the pitch driving torques in each of the historical periods is acquired in step S101.

Referring to Figure 2, step S101 includes: for each of the pitch driving torques, determining an occurrence frequency of the pitch driving torque in each of different pitch motion states and a corresponding distribution parameter based on operation data in the M historical periods (it should be understood that "corresponding" here means that the distribution parameter corresponds to the occurrence frequency and also to the pitch motion state), where the pitch motion states include forward state, constant state and backward state; and determining the probability density based on the occurrence frequencies and the corresponding distribution parameters. It should be noted that the pitch motion state refers to a motion state that drives the blades to vary pitch. For example, in a case that a hydraulic rod for driving rotation of a blade root is gradually pushed out to a full out state, the blade root drives the blades to gradually rotate to a feathering state, and at this time, the pitch motion state is the forward state. The backward state is opposite to the forward state. That is, in a case that the hydraulic rod for driving rotation of the blade root gradually returns into a hydraulic cylinder from the full out state, the blade root drives the blades to gradually rotate in a reverse direction from the feathering state to a reverse pitch state, and at this time, the pitch motion state is the backward state. In a case that the hydraulic rod for driving rotation of the blade root remains stationary, the blades do not move, and at this time, the pitch motion state is the constant state. For purpose of understanding, connection relationships among various structures are briefly explained. The hydraulic rod is installed in the hydraulic cylinder in a stretchable manner, an output end of the hydraulic rod is connected to a pitch crank on the blade root through a hydraulic rod bearing, and stretch of the hydraulic rod drives the blade root to rotate. According to an embodiment of the present disclosure, operation data of the wind turbine is collected by a data collection system as shown in Figure 2. Thus, before step S101, the method further includes collecting operation data of the wind turbine in the M historical periods. The operation data is Supervisory Control and Data Acquisition (SCADA) data, including an output power, an impeller rotation speed, a generator torque, a nacelle acceleration x-direction component, a nacelle acceleration y-direction component and a pitch angle, which may fully reflect operation conditions of the wind turbine, these conditions being related to the pitch driving torque. Therefore, the distribution parameter of the pitch driving torque may be determined by a pitch driving torque distribution evaluation module as shown in Figure 2 accordingly. In addition, because the data is collected during operation of the wind turbine, no additional data is required to be collected, and thus no additional data collection sensor is required to be configured. Therefore, a product cost can be reduced and a time cost of service life evaluation can be saved, thus improving the economic performance.

Based on the forward state, the backward state and the constant state of blade pitch, there are three different pitch motion states. In each of the historical periods, the pitch driving torques may go through these three states. Therefore, an occurrence frequency of the pitch driving torque in each of the three pitch motion states and a corresponding distribution parameter may be determined, to describe the pitch driving torque more accurately.

As an example, for one of the historical periods, the pitch motion usually only has the above three states. Therefore, a sum of occurrence frequencies for the three states is equal to 1. The occurrence frequency is expressed by the following equation:

$$f_t = \begin{cases} f_{1,t}, & \text{forward state} \\ (1 - f_{1,t} - f_{2,t}), & \text{constant state} \\ f_{2,t}, & \text{backward state} \end{cases}$$

Based on the above equation, a probability density of a pitch driving torque $L_i$ in a certain historical period t may be described as:

$$p_t(L_i) = f_{1,t} * f_{t,1}(L_i) + (1 - f_{1,t} - f_{2,t}) * f_{t,3}(L_i) + f_{2,t} * f_{t,2}(L_i)$$

where $f_{t,1}(L_i)$, $f_{t,3}(L_i)$, $f_{t,2}(L_i)$ represent probability densities of the pitch driving torque $L_i$ in three pitch motion states respectively. It should be noted that to represent both probability density and the occurrence frequency by the same character f, a subscript t is placed in front of or behind the number for differentiation. In an example in which the probability density follows a normal distribution, the probability density may be expressed by a mathematic expectation $\mu$ and a standard deviation $\sigma$ of a variable (in this case, the pitch driving torque $L_i$), that is,

$$f_t(L_i) = \begin{cases} f_{t,1}(L_i, \mu_{f_{t,1}}, \sigma_{f_{t,1}}), & \text{forward state} \\ f_{t,3}(L_i, \mu_{f_{t,3}}, \sigma_{f_{t,3}}), & \text{constant state} \\ f_{t,2}(L_i, \mu_{f_{t,2}}, \sigma_{f_{t,2}}), & \text{backward state} \end{cases}$$

where $\mu_{ft,1}$, $\sigma_{ft,1}$, $\mu_{ft,2}$ $\sigma_{ft,2}$, $\mu_{ft,3}$, $\sigma_{ft,3}$ respectively represent distribution parameters of the pitch driving torque $L_i$ in three pitch motion states in the historical period t, and subscripts $f_{t,1}$, $f_{t,2}$, $f_{t,3}$ represent the forward state, the backward state, and the constant state respectively. That is, in this example, the probability density $p_t(L_i)$ of the pitch driving torque $L_i$ may be obtained by using these eight parameters of $f_{1,t}$, $f_{2,t}$, $\mu_{ft,1}$, $\sigma_{ft,1}$, $\mu_{ft,2}$, $\sigma_{ft,2}$, $\mu_{ft,3}$, $\sigma_{ft,3}$.

In an embodiment, in determining the occurrence frequency of the pitch driving torque in each of different pitch motion states and the corresponding distribution parameter based on the operation data, for purpose of data calculation, operation data collected in each of the historical periods may form one multi-dimensional vector, which is recorded as an operation data column vector. For example, for the different operation data described above, the output power $Pwr$, the impeller rotation speed r, the generator torque $T$, the nacelle acceleration x-direction component $Ax$, the nacelle acceleration y-direction component $Ay$, and the pitch angle $Pa$ may form a 6-dimensional vector $[Pwr_t, r_t, T_t, Ax_t, Ay_t, Pa_t]$, where t in the subscript represents a certain historical period. Calculation targets, i.e., the occurrence frequency and the distribution parameter, may form a multi-dimensional vector, which is $[f_{1,t}, f_{2,t}, \mu_{ft,1}, \sigma_{ft,1}, \mu_{ft,2}, \sigma_{ft,2}, \mu_{ft,3}, \sigma_{ft,3}]$ for the example described above.

The occurrence frequency and the corresponding distribution parameter described above may be determined by using the following equation.

$$\begin{bmatrix} f_{1,t} \\ f_{2,t} \\ \mu_{f_{t,1}} \\ \sigma_{f_{t,1}} \\ \mu_{f_{t,2}} \\ \sigma_{f_{t,2}} \\ \mu_{f_{t,3}} \\ \sigma_{f_{t,3}} \end{bmatrix} = G_1 \left( \begin{bmatrix} a_{11} & a_{12} & a_{13} & a_{14} & a_{15} & a_{16} \\ a_{21} & a_{22} & a_{23} & a_{24} & a_{25} & a_{26} \\ a_{31} & a_{32} & a_{33} & a_{34} & a_{35} & a_{36} \\ a_{41} & a_{42} & a_{43} & a_{44} & a_{45} & a_{46} \\ a_{51} & a_{52} & a_{53} & a_{54} & a_{55} & a_{56} \\ a_{61} & a_{62} & a_{63} & a_{64} & a_{65} & a_{66} \\ a_{71} & a_{72} & a_{73} & a_{74} & a_{75} & a_{76} \\ a_{81} & a_{82} & a_{83} & a_{84} & a_{85} & a_{86} \end{bmatrix} G_0 \left( \begin{bmatrix} Pwr_t \\ r_t \\ T_t \\ Ax_t \\ Ay_t \\ Pa_t \end{bmatrix} \right) + \begin{bmatrix} b_1 \\ b_2 \\ b_3 \\ b_4 \\ b_5 \\ b_6 \\ b_7 \\ b_8 \end{bmatrix} \right) + \begin{bmatrix} c_1 \\ c_2 \\ c_3 \\ c_4 \\ c_5 \\ c_6 \\ c_7 \\ c_8 \end{bmatrix}$$

In an embodiment, for each of the historical periods, a product of a correlation coefficient matrix $a_{i,j}$, a first transfer function $G_0$ and an operation data column vector is determined to obtain a first column vector, where the number of rows of the correlation coefficient matrix is equal to a sum of the number of occurrence frequencies and the number of corresponding distribution parameters, and the operation data column vector includes multiple items of the operation data. In this example, the number of rows of the correlation coefficient matrix may be equal to 8. That is, a weighted sum of the multiple items of operation data may be calculated by using products of a row of coefficients in the correlation coefficient matrix $a_{i,j}$ and the first transfer function $G_0$ as weights, thereby merging the multiple items of operation data into a single data. The number of weighted sums is dependent on the required number of parameters to be output. Then, a sum of the first column vector (formed by the multiple weighted sums described above) and a first correlation coefficient column vector $b_i$ is determined, and the sum is multiplied with a second transfer function $G_1$ to obtain a second column vector. Next, a sum of the second column vector and a second correlation coefficient column vector $c_i$ is determined (which is equivalent to changing the weighted sums described above for many times) as an output vector, where the output vector includes values of the occurrence frequency and the corresponding distribution parameter. Thus, data is converted. According to an embodiment of the present disclosure, the correlation coefficient matrix, the first correlation coefficient column vector, the second correlation coefficient column vector, the first transfer function and the second transfer function are obtained by testing or training. It should be understood that the subscript i in each of correlation coefficients here represents a serial number of a specific coefficient, which is irrelevant to the subscript i of the pitch driving torque.

Referring back to Figure 1, in step S102, an angle cumulative value of a pitch angle in each of the M historical periods is acquired. The angle cumulative value is obtained by a cumulative pitch module as shown in Figure 2. Pitch variation essentially means that the blades rotate by a certain angle under the action of the pitch driving torque. Therefore, accumulation of the pitch driving torque in the term of the pitch angle can fully reflect a load borne by the pitch bearing. The acquired angle cumulative value may be used as a basis for service life evaluation of the pitch bearing.

In an embodiment, in one of the historical periods, the blades may first subject to pitch variation in a forward direction and then in a backward direction, offsetting with each other. Therefore, the angle cumulative value of the pitch angle may be gradually calculated based on a set frequency. As an example, the following equation may be used:

$$\Delta\phi = \sum_{i=0}^{N} |\phi_i - \phi_{i+1}|$$

In the above equation, $i = 1, 2, \cdots, N$, $N = 600$, representing that a sampling frequency is 1Hz, and $\phi_i$ represents an i-th pitch angle in the historical period.

In step S103, an equivalent load of the pitch bearing is determined based on the pitch driving torque, the probability density of the pitch driving torque in the M historical periods, and angle cumulative values in the M historical periods. The equivalent load of the pitch bearing is obtained by a pitch bearing consumed service life evaluation module as shown in Figure 2. As mentioned above, the equivalent load of the pitch bearing may be obtained by the accumulation of the pitch driving torque in the term of the pitch angle.

In an embodiment, step S103 includes: for each of the historical periods, determining a product of an m-th power of each pitch driving torque, a probability density of the pitch driving torque and the angle cumulative value, and calculating a sum of the products corresponding to the pitch driving torques to obtain a reference load for the historical period, where m represents a material Wall coefficient of the pitch bearing; determining a reference load average value in multiple historical periods; and determining a (1/m)-th power of the reference load average value as the equivalent load of the pitch bearing.

For a pitch system of an in-service in-operation wind turbine that has experienced the M historical periods, probability densities of N pitch driving torques may be summarized to obtain the following process matrix:

$$
\begin{array}{cccccc}
\downarrow & L_1 & L_2 & L_3 & \cdots & L_N \\
t_1 & p_1(L_1) & p_1(L_2) & p_1(L_3) & \cdots & p_1(L_N) \\
t_2 & p_2(L_1) & p_2(L_2) & p_2(L_3) & \cdots & p_2(L_N) \\
t_3 & p_3(L_1) & p_3(L_2) & p_3(L_3) & \cdots & p_3(L_N) \\
\vdots & \vdots & \vdots & \vdots & \ddots & \vdots \\
t_M & p_M(L_1) & p_M(L_2) & p_M(L_3) & \cdots & p_M(L_N)
\end{array}
$$

By taking the pitch driving torque $L_1$ as an example, a column of data below $L_1$ each represents a probability density of the pitch driving torque $L_1$ in each of the historical periods.

The angle cumulative values of the pitch angles in the M historical periods may be summarized to obtain the following process matrix:

$$
\begin{array}{cccccc}
\downarrow & L_1 & L_2 & L_3 & \cdots & L_N \\
t_1 & \Delta\phi_1 & \Delta\phi_1 & \Delta\phi_1 & \cdots & \Delta\phi_1 \\
t_2 & \Delta\phi_2 & \Delta\phi_2 & \Delta\phi_2 & \cdots & \Delta\phi_2 \\
t_3 & \Delta\phi_3 & \Delta\phi_3 & \Delta\phi_3 & \cdots & \Delta\phi_3 \\
\vdots & \vdots & \vdots & \vdots & \ddots & \vdots \\
t_M & \Delta\phi_M & \Delta\phi_M & \Delta\phi_M & \cdots & \Delta\phi_M
\end{array}
$$

Similar to the previous process matrix, by taking the pitch driving torque $L_1$ as an example, a column of data below $L_1$ each represents an angle cumulative value of the pitch angle corresponding to the pitch driving torque $L_1$ in each of the historical periods. The difference between the two matrices is that angle cumulative values in a same row (that is, in each of the historical periods) are the same since the angle cumulative value is fixed and does not change with the pitch driving torques in one historical period.

The equivalent load of the pitch bearing is expressed by the following equation:

$$L_{DEQ_{site}} = \sqrt[m]{\sum_{j=1}^{M} \sum_{i=1}^{N} \frac{\Delta\phi_j p_j(L_i) L_i^m}{M}}$$

In step S104, a consumed service life of the pitch bearing is determined based on the equivalent load of the pitch bearing. The consumed service life is obtained by the pitch bearing consumed service life evaluation module as shown in Figure 2. In an embodiment, a ratio of the equivalent load of the pitch bearing to a designed equivalent load may be determined first, and then a product of the ratio and a designed service life of the pitch bearing may be determined as the consumed service life of the pitch bearing, which may be expressed by the following equation:

$$l = \frac{L_{DEQ_{site}}^m}{L_{DEQ_{design}}^m} \, lifetime_{design}$$

$L_{DEQ_{design}}^m$ represents the designed equivalent load of the pitch bearing, and service lifetime$_{design}$ represents the designed service life of the pitch bearing.

In an embodiment, the method of service life evaluation according to the embodiment of the present disclosure may further include: acquiring estimated wind resource parameters of multiple wind turbine positions in a target future period, where the estimated wind resource parameters include estimated wind speeds; for each of the pitch driving torques, determining a probability density of the pitch driving torque at multiple estimated wind speeds and an estimated angle cumulative value of the pitch angle in the target future period based on the estimated wind resource parameters; determining an estimated equivalent load of the pitch bearing in the target future period based on the multiple estimated wind speeds, the pitch driving torques, the probability density of each pitch driving torque at the multiple estimated wind speeds, and the estimated angle cumulative value at the multiple estimated wind speeds; determining an estimated service life consumption of the pitch bearing in the target future period based on the estimated equivalent load; and determining an estimated remaining service life of the pitch bearing based on a designed service life, the consumed service life and the estimated service life consumption of the pitch bearing.

For a pitch bearing of a wind turbine in operation, a consumed service life may be obtained by the online system for evaluating service life of a pitch bearing as shown in Figure 2. For a remaining service life, although operation data of the wind turbine in future cannot be acquired in advance, subsequent operation of the wind turbine is affected by wind resource conditions of a wind power plant in future. Based on estimated wind resource parameters of multiple wind turbine positions in a target future period, an estimated equivalent load of the pitch bearing in the target future period may be estimated, thus a service life consumption in the target future period may be evaluated. Finally, an estimated remaining service life of the pitch bearing at the end of the target future period may be obtained based on the estimated service life consumption, a designed service life and the consumed service life. Because wind resource parameters for the next few years may be predicted based on the current wind resource analysis technology, estimated wind resource parameters in the target future period may be obtained by a data collection system and a wind resource statistical analysis module as shown in Figure 3. Therefore, no additional data is required to be collected, and thus no additional data collection sensor is required to be deployed. Therefore, a product cost can be reduced and a time cost of service life evaluation can be saved, thus improving the economic performance.

In an embodiment, the system for predicting remaining service life of a pitch bearing may take estimated wind resource parameters as input. First, for each pitch driving torque, a probability density of the pitch driving torque (which may be the same as the pitch driving torque in step S101) at multiple estimated wind speeds is estimated by the pitch driving torque distribution estimation module as shown in Figure 3, and an estimated angle cumulative value of the pitch angle in the target future period is estimated by the cumulative pitch angle prediction module as shown in Figure 3. The estimation may be implemented by using the transfer function and correlation coefficient, for which reference may be made to step S101.

As an example, an estimated wind speed v may be an annual average wind speed. The estimated wind resource parameters further include a turbulence intensity ti, a wind shear $\alpha$ and an air density $\rho$. For a wind power plant, different estimated wind speeds $v$ may occur with different attribute values (different turbulence intensities ti, different wind shears $\alpha$, or the like). An input (i.e., estimated wind resource parameters) of the pitch driving torque distribution estimation module and the cumulative pitch angle prediction module is a single estimated wind speed $v_k$ and an attribute value of $v_k$, and the air

density $\rho$ is added to the estimated wind resource parameters as a constant attribute value. That is, $[v_k, ti_k, \alpha_k, \rho_k]$ represents an input vector, where $k$ in a subscript represents a serial number of the estimated wind speed.

For the pitch driving torque distribution estimation module, the division of pitch motion states at a single estimated wind speed is the same as that in the above embodiment. Three pitch motion states are divided based on a forward state, a backward state and a constant state of blade pitch. An output may still be distribution parameters in each of the three pitch motion states and corresponding occurrence frequencies. Thus, a probability density distribution of a pitch driving torque at the estimated wind speed may be determined by using the distribution parameter and the occurrence frequency of the pitch driving torque at the estimated wind speed. A probability density of a pitch driving torque $L_i$ at a certain estimated wind speed v is expressed by the following equation:

$$p_v(L_i) = f_{1,v} * f_{v,1}(L_i) + \left(1 - f_{1,v} - f_{2,v}\right) * f_{v,3}(L_i) + f_{2,v} * f_{v,2}(L_i)$$

The pitch driving torque at a single estimated wind speed may go through all three states, with corresponding occurrence frequencies of $f_{1,v}$, $1 - f_{1,v} - f_{2,v}$, and $f_{2,v}$. The pitch driving torque at the three states has respective probability densities, i.e., $f_{v,1}(L_i)$, $f_{v,3}(L_i)$, $f_{v,2}(L_i)$. Similar to $p_t(L_i)$, to represent both the probability density and the occurrence frequency by the same character $f$, a subscript of $v$ is placed in front of or behind the numbers for differentiation. In addition, referring to the probability densities of the pitch driving torque $L_i$ in three pitch motion states in the historical period t, the probability densities $f_{v,1}(L_i)$, $f_{v,3}(L_i)$, and $f_{v,2}(L_i)$ of the pitch driving torque $L_i$ in three pitch motion states at the estimated wind speed v may also follow a normal distribution, and thus may also be expressed by a mathematic expectation $\mu$ and a standard deviation $\sigma$ of the pitch driving torque $L_i$. That is, distribution parameters are $\mu_{fv,1}, \sigma_{fv,1}, \mu_{fv,2}, \sigma_{fv,2}, \mu_{fv,3}, \sigma_{fv,3}$. The occurrence frequencies and the corresponding distribution parameters described above may be determined by using the following equation.

$$\begin{bmatrix} f_{1,v} \\ f_{2,v} \\ \mu_{f_{v,1}} \\ \sigma_{f_{v,1}} \\ \mu_{f_{v,2}} \\ \sigma_{f_{v,2}} \\ \mu_{f_{v,3}} \\ \sigma_{f_{v,3}} \end{bmatrix} = F_1 \left( \begin{bmatrix} a_{11} & a_{12} & a_{13} & a_{14} \\ a_{21} & a_{22} & a_{23} & a_{24} \\ a_{31} & a_{32} & a_{33} & a_{34} \\ a_{41} & a_{42} & a_{43} & a_{44} \\ a_{51} & a_{52} & a_{53} & a_{54} \\ a_{61} & a_{62} & a_{63} & a_{64} \\ a_{71} & a_{72} & a_{73} & a_{74} \\ a_{81} & a_{82} & a_{83} & a_{84} \end{bmatrix} F_0 \left( \begin{bmatrix} v_k \\ ti_k \\ \alpha_k \\ \rho_k \end{bmatrix} \right) + \begin{bmatrix} b_1 \\ b_2 \\ b_3 \\ b_4 \\ b_5 \\ b_6 \\ b_7 \\ b_8 \end{bmatrix} \right) + \begin{bmatrix} c_1 \\ c_2 \\ c_3 \\ c_4 \\ c_5 \\ c_6 \\ c_7 \\ c_8 \end{bmatrix}$$

$F_1, F_0$ represent transfer functions, and $a_{m,n}, b_m, c_n$ represent correlation coefficients. The transfer functions and the correlation coefficients may be obtained by training with a simulated database. $p_v(L_i)$ may be obtained by substituting the occurrence frequencies and the distribution parameters obtained into the above equation of $p_v(L_i)$.

The cumulative pitch angle prediction module can predict an estimated angle cumulative value of the pitch angle at a single estimated wind speed by the following prediction equation:

$$\Delta\phi_v = Q_1 \left( [a_1 \quad a_2 \quad a_3 \quad a_4] Q_0 \left( \begin{bmatrix} v_k \\ ti_k \\ \alpha_k \\ \rho \end{bmatrix} \right) + b_1 \right) + c_1$$

$Q_1$, $Q_0$ represent transfer functions, and $a_1$, $a_2$, $a_3$, $a_4$, $b_1$, $c_1$ represent correlation coefficients. The transfer functions and the correlation coefficients may be obtained by training with a simulated database.

After the distribution parameters of the pitch driving torques at multiple estimated wind speeds and the estimated angle cumulative value of the pitch angle in the target future period are determined, an estimated equivalent load and an estimated service life consumption may be estimated by a pitch bearing consumed service life evaluation module as shown in Figure 3 in a way similar to step S103. Finally, an estimated remaining service life may be estimated by a pitch bearing remaining service life prediction module as shown in Figure 3.

In an embodiment, gradually determining the estimated equivalent load, the estimated service life consumption and the estimated remaining service life includes: determining the probability densities of the multiple estimated wind speeds; for each of the pitch driving torques at each of the estimated wind speeds, determining a product of the probability density of the estimated wind speed, an m-th power of the pitch driving torque, a probability density of the pitch driving torque and the estimated angle cumulative value, and calculating a sum of the products corresponding to the pitch driving torques at the estimated wind speeds to obtain an estimated reference load, where m represents a material Wall coefficient of the pitch bearing; and determining a (1/m)-th power of the estimated reference load as the estimated equivalent load.

For a pitch system of a wind turbine in a target future period T, N pitch driving torques are divided, and an estimated equivalent load of a pitch bearing is expressed by the following equation:

$$L_{DEQ_{pred_T}} = \sqrt[m]{\sum_{v=wsp_{cutin}}^{wsp_{cutout}} \sum_{i=1}^{N} \Delta \phi_v p_v(L_i) L_i^m f(v)}$$

$f(v)$ represents a probability density of an estimated wind speed, which follows a Rayleigh distribution and is only related to an annual average wind speed.

An estimated remaining service life of the pitch bearing in the target future period T is expressed by the following equation:

$$l_{remain} = lifetime_{design} - l_{cost} - l_{pred}$$

$l_{cost}$ represents a consumed service life, which is obtained by step S104, and $l_{pred}$ represents an estimated service life consumption in the target future period T, which satisfies the following equation:

$$l_{pred} = \frac{L_{DEQ_{pred_T}}^m}{L_{DEQ_{design}}^m} lifetime_{design}$$

According to a service life evaluation method for a pitch bearing of a wind turbine in an embodiment of the present disclosure, the service life of the pitch bearing is evaluated by using operation data collected during operation of the wind turbine and estimated wind resource parameters that may be predicted based on the current technology. No additional data is required to be collected, and thus no additional data collection sensor is required to be deployed. Therefore, a product cost can be reduced and a time cost of service life evaluation can be saved. According to the present disclosure, within an acceptable precision range, real-time online evaluation of a consumed service life and prediction of a future remaining service life can be achieved. Predictive operation and maintenance and prediction of failure events may be carried out on the premise of ensuring safe operation of the wind turbine, thereby reducing unplanned downtime of the wind turbine and improving its economic benefit.

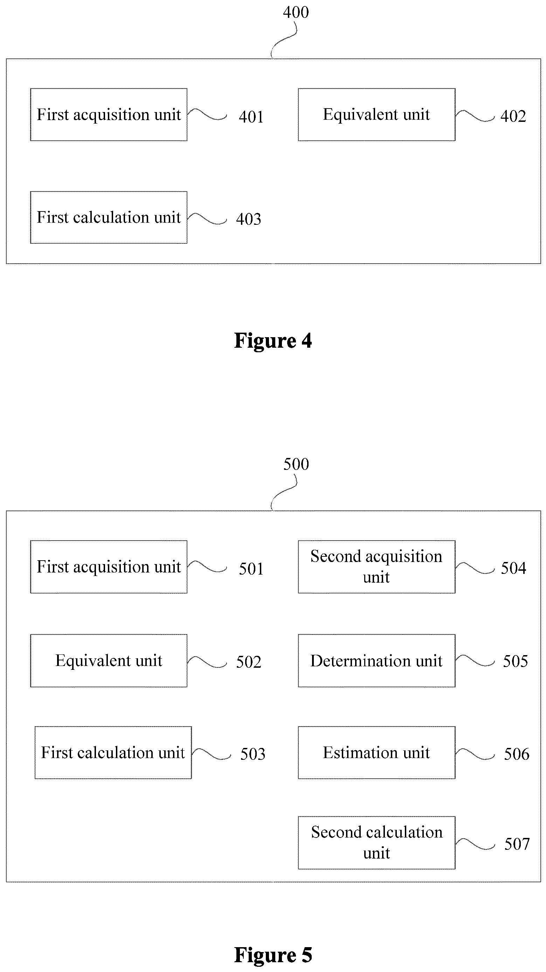

Figure 4 is a block diagram illustrating a service life evaluation device for a pitch bearing of a wind turbine according to an embodiment of the present disclosure.

Referring to Figure 4, the device 400 for evaluating service life of a pitch bearing of a wind turbine includes a first acquisition unit 401, an equivalent unit 402, and a first calculation unit 403, which corresponds to the pitch bearing online service life evaluation system as shown in Figure 2.

The first acquisition unit 401 may be configured to acquire a probability density of a pitch driving torque in M historical periods, where M is a positive integer. Because the pitch driving torque may affect a loss of the pitch bearing, this parameter is selected to evaluate a service life of the pitch bearing. Further, the wind turbine may generally operate for several years cumulatively. Cumulative operation duration may be divided into M historical periods based on a certain step, and data processing may be carried out separately for each of the historical periods, to ensure the consistency of duration of a single historical period used in evaluation of different wind turbines, thus ensuring the universality of the strategy.

In an embodiment, the pitch driving torque usually changes in a certain interval. Multiple specific numerical values may be selected from the interval. For example, multiple specific pitch driving torques are obtained based on a set step. That is, the selected multiple pitch driving torques may form an arithmetic progression. Then, a probability density of each of the pitch driving torques in each of the historical periods is acquired.

Referring to Figure 2, the first acquisition unit 401 may be configured to: for each of the pitch driving torques, determine an occurrence frequency of the pitch driving torque in each of different pitch motion states and a corresponding distribution parameter based on operation data in the M historical periods (it should be understood that "corresponding" here means that the distribution parameter corresponds to the occurrence frequency and also to the pitch motion state), where the pitch motion states include forward state, constant state and backward state; and determine the probability density based on the occurrence frequencies and the corresponding distribution parameters. According to an embodiment of the present disclosure, operation data of the wind turbine is collected by a data collection system as shown in Figure 2.

Thus, before the occurrence frequency and the corresponding distribution parameter are determined, the first acquisition unit 401 may be further configured to collect operation data of the wind turbine in the M historical periods. The operation data is SCADA data, including an output power, an impeller rotation speed, a generator torque, a nacelle acceleration x-direction component, a nacelle acceleration y-direction component and a pitch angle, which may fully reflect operation conditions of the wind turbine, these conditions being related to the pitch driving torque. Therefore, the distribution parameter of the pitch driving torque may be determined by the pitch driving torque distribution evaluation module as shown in Figure 2 accordingly. In addition, because the data is collected during operation of the wind turbine, no additional data is required to be collected, and thus no additional data collection sensor is required to be configured. Therefore, a product cost can be reduced and a time cost of service life evaluation can be saved, thus improving the economic performance.

Based on the forward state, the backward state and the constant state of blade pitch, there are three different pitch motion states. In each of the historical periods, the pitch driving torque may go through all these three states. Therefore, an occurrence frequency of the pitch driving torque in each of the three pitch motion states and a corresponding distribution parameter may be determined, to describe the pitch driving torque more accurately.

In an embodiment, the first acquisition unit 401 may be configured to: for each of the historical periods, determine a product of a correlation coefficient matrix, a first transfer function and an operation data column vector to obtain a first column vector, where the number of rows of the correlation coefficient matrix is equal to a sum of the number of occurrence frequencies and the number of corresponding distribution parameters, and the operation data column vector includes multiple items of the operation data; determine a sum of the first column vector and a first correlation coefficient column vector, and multiply the sum with a second transfer function to obtain a second column vector; and determine a sum of the second column vector and a second correlation coefficient column vector (which is equivalent to changing the weighted sums described above for many times) as an output vector, where the output vector includes values of the occurrence frequency and the corresponding distribution parameter. Thus, data is converted. According to an embodiment of the present disclosure, the correlation coefficient matrix, the first correlation coefficient column vector, the second correlation coefficient column vector, the first transfer function and the second transfer function are obtained by testing or training.

The first acquisition unit 401 may be further configured to acquire an angle cumulative value of a pitch angle in each of the M historical periods. The angle cumulative value is obtained by the cumulative pitch module as shown in Figure 2. Pitch variation essentially means that the blades rotate by a certain angle under the action of the pitch driving torque. Therefore, t accumulation of the pitch driving torque in the term of the pitch angle can fully reflect a load borne by the pitch bearing. The acquired angle cumulative value may be used as a basis for service life evaluation of the pitch bearing.

The equivalent unit 402 may be configured to determine an equivalent load of the pitch bearing based on the pitch driving torque, the probability density of the pitch driving torque in the M historical periods, and angle cumulative values in the M historical periods. The equivalent load of the pitch bearing is obtained by the pitch bearing consumed service life evaluation module as shown in Figure 2. As mentioned above, the equivalent load of the pitch bearing may be obtained by the accumulation of the pitch driving torque in the term of the pitch angle.

In an embodiment, the equivalent unit 402 may be configured to: for each of the historical periods, determine a product of an m-th power of each pitch driving torque, a probability density of the pitch driving torque and the angle cumulative value, and calculate a sum of the products corresponding to the pitch driving torques to obtain a reference load for the historical period, where m represents a material Wall coefficient of the pitch bearing; determine a reference load average value in multiple historical periods; and determine a (1/m)-th power of the reference load average value as the equivalent load of the pitch bearing.

The first calculation unit 403 may be configured to determine a consumed service life of the pitch bearing based on the equivalent load of the pitch bearing. The consumed service life is obtained by the pitch bearing consumed service life evaluation module as shown in Figure 2. In an embodiment, a ratio of the equivalent load of the pitch bearing to a designed equivalent load may be determined first, and then a product of the ratio and a designed service life of the pitch bearing may be determined as the consumed service life of the pitch bearing.

Figure 5 is a block diagram illustrating a service life evaluation device for a pitch bearing of a wind turbine according to another embodiment of the present disclosure.

Referring to Figure 5, the device 500 for evaluating service life of a pitch bearing of a wind turbine includes a first acquisition unit 501, an equivalent unit 502, a first calculation unit 503, a second acquisition unit 504, a determination unit 505, an estimation unit 506, and a second calculation unit 507. The first acquisition unit 501, the equivalent unit 502, and the first calculation unit 503 correspond to the pitch bearing online service life evaluation system as shown in Figure 2, and perform the same actions as the first acquisition unit 401, the equivalent unit 402, and the first calculation unit 403, which are not repeated here. The second acquisition unit 504, the determination unit 505, the estimation unit 506, and the second calculation unit 507 correspond to the system for predicting remaining service life of a pitch bearing as shown in Figure 3.

The second acquisition unit 504 may be configured to acquire estimated wind resource parameters of multiple wind turbine positions in a target future period, where the estimated wind resource parameters include estimated wind speeds. As an example, the estimated wind speed may be an annual average wind speed. The estimated wind resource parameters further include a turbulence intensity, a wind shear and an air density. For a wind power plant, different estimated wind speeds may occur with different attribute values (different turbulence intensities, different wind shears, or the like). An input (i.e., estimated wind resource parameters) of the pitch driving torque distribution estimation module and the cumulative pitch angle prediction module is a single estimated wind speed and its attribute value, and the air density is added to the estimated wind resource parameters as a constant attribute value.

The determination unit 505 may be configured to, for each of the pitch driving torques, determine a probability density of the pitch driving torque at multiple estimated wind speeds and an estimated angle cumulative value of the pitch angle in the target future period based on the estimated wind resource parameters. For its determination method, reference may be made to the first acquisition unit 501, which may be implemented by using the transfer function and correlation coefficient.

The estimation unit 506 may be configured to determine an estimated equivalent load of the pitch bearing in the target future period based on the multiple estimated wind speeds, the pitch driving torques, the probability density of each pitch driving torque at the multiple estimated wind speeds, and the estimated angle cumulative value at the multiple estimated wind speeds.

In an embodiment, the estimation unit 506 may be configured to: determine the probability densities of the multiple estimated wind speeds; for each of the pitch driving torques at each of the estimated wind speeds, determine a product of the probability density of the estimated wind speed, an m-th power of the pitch driving torque, a probability density of the pitch driving torque and the estimated angle cumulative value, and calculate a sum of the products corresponding to the pitch driving torques at the estimated wind speeds to obtain an estimated reference load, where m represents a material Wall coefficient of the pitch bearing; and determine a $(1/m)$-th power of the estimated reference load as the estimated equivalent load.

The second calculation unit 507 may be configured to determine an estimated service life consumption of the pitch bearing in the target future period based on the estimated equivalent load. For its determination method, reference may be made to the first calculation unit 503.

The second calculation unit 507 may be further configured to determine an estimated remaining service life of the pitch bearing based on a designed service life, the consumed service life and the estimated service life consumption of the pitch bearing. Here, the consumed service life is obtained by the first calculation unit 503. In an embodiment, the estimated remaining service life may be determined by subtracting the consumed service life and the estimated service life consumption from the designed service life.

For a pitch bearing of a wind turbine in operation, a consumed service life may be obtained by online system for evaluating service life of a pitch bearing as shown in Figure 2. For a remaining service life, although operation data of the wind turbine in future cannot be acquired in advance, subsequent operation of the wind turbine is affected by wind resource conditions of a wind power plant in future. Based on estimated wind resource parameters of multiple wind turbine positions in a target future period, an estimated equivalent load of the pitch bearing in the target future period may be estimated, thus a service life consumption in the target future period may be evaluated. Finally, an estimated remaining service life of the pitch bearing at the end of the target future period may be obtained by collectively considering the estimated service life consumption with a designed service life and the consumed service life. Because wind resource parameters for the next few years may be predicted based on the current wind resource analysis technology, estimated wind resource parameters in the target future period may be obtained by a data collection system and a wind resource statistical analysis module as shown in Figure 3. Therefore, no additional data is required to be collected, and thus no additional data collection sensor is required to be deployed. Therefore, a product cost can be reduced and a time cost of service life evaluation can be saved, thus improving the economic performance.

A service life evaluation method for a pitch bearing of a wind turbine according to an embodiment of the present disclosure may be written as a computer program and stored on a computer-readable storage medium. Instructions corresponding to the computer program, when executed by a processor, implement the service life evaluation method for the pitch bearing of the wind turbine as described above. Examples of the computer-readable storage medium include: read-only memory (ROM), random-access programmable read-only memory (PROM), electrically erasable programmable read-only memory (EEPROM), random-access memory (RAM), dynamic random-access memory (DRAM), static random-access memory (SRAM), flash memory, nonvolatile memory, CD-ROM, CD-R, CD+R, CD-RW, CD+RW, DVD-ROM, DVD-R, DVD+R, DVD-RW, DVD+RW, DVD-RAM, BD-ROM, BD-R, BD-R LTH, BD-RE, Blu-ray or optical disk memory, hard disk drive (HDD), solid state hard disk (SSD), card-type memory (such as a multimedia card, a secure digital (SD) card or an extreme digital (XD) card), a magnetic tape, a floppy disk, a magneto-optical data storage device, an optical data storage device, a hard disk, a solid state disk, and any other device configured to store a computer program and any associated data, data files and data structures in a non-transitory manner and provide the computer program and any associated data, data files and data structures to a processor or computer to enable the processor or computer to execute the computer program. In an example, the computer program and any associated data, data files and data structures are distributed on a networked computer system, so that the computer program and any associated data, data files and data structures are stored, accessed and executed in a distributed manner by one or more processors or computers.

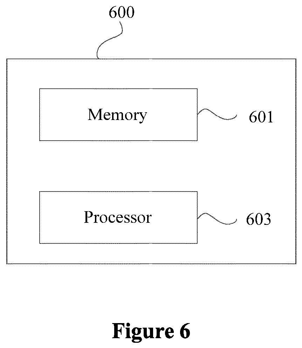

Figure 6 is a block diagram illustrating a computer apparatus according to an embodiment of the present disclosure.

Referring to Figure 6, a computer apparatus 600 includes at least one memory 601 and at least one processor 602. The at least one memory 601 is configured to store a set of computer-executable instructions. The set of computer-executable instructions, when executed by the at least one processor 602, performs the service life evaluation method for the pitch bearing of the wind turbine according to the exemplary embodiment of the present disclosure.

As an example, the computer apparatus 600 may be a PC computer, a tablet device, a personal digital assistant, a smart phone, or other devices capable of executing the set of instructions described above. Here, the computer apparatus 600 is not necessarily a single electronic apparatus, but may also be any set of devices or circuits capable of individually or jointly executing the above instructions (or the set of instructions). The computer apparatus 600 may also be a part of an integrated control system or a system manager, or may be configured as a portable electronic apparatus that interfaces locally or remotely (such as via wireless transmission).

In the computer apparatus 600, the processor 602 may include a central processing unit (CPU), a graphics processing unit (GPU), a programmable logic device, a special purpose processor system, a microcontroller or a microprocessor. By way of example rather than limitation, the processor may also include an analog processor, a digital processor, a microprocessor, a multi-core processor, a processor array, a network processor, or the like.

Instructions or codes stored in the memory 601 may be executed by the processor 602. The memory 601 may also store data. Instructions and data may also be sent and received over a network via a network interface device, where the network interface device may adopt any known transmission protocol.

The memory 601 may be integrated with the processor 602. For example, an RAM or flash memory is provided within an integrated circuit microprocessor or the like. In addition, the memory 601 may include separate devices, such as external disk drives, storage arrays, or any other storage devices that may be used by a database system. The memory 601 and the processor 602 may be operatively coupled, or may communicate with each other, for example, through an I/O port, a network connection, or the like, to enable the processor 602 to read files stored in the memory.

In addition, the computer apparatus 600 may further include a video display (such as a liquid crystal display) and a user interaction interface (such as a keyboard, a mouse, a touch input device, or the like). All components of the computer apparatus 600 may be connected to each other via a bus and/or a network.

According to the present disclosure, a service life of a pitch bearing is evaluated by using operation data inevitably to be collected during operation of a wind turbine and estimated wind resource parameters that can be predicted based on the current technology. No additional data is required to be collected, and thus no additional data collection sensor is required to be deployed. Therefore, a product cost can be reduced and a time cost of service life evaluation can be saved. According to the present disclosure, within an acceptable precision range, real-time online evaluation of a consumed service life and prediction of a future remaining service life can be achieved. Predictive operation and maintenance and prediction of failure events may be carried out on the premise of ensuring safe operation of the wind turbine, thereby reducing unplanned downtime of the wind turbine and improving its economic benefit.

The specific embodiments of the present disclosure have been described in detail above. Although some embodiments have been shown and described, it should be understood by those skilled in the art that, modifications and variations may be made to these embodiments without departing from the principle of the present disclosure whose scope is defined by the claims, and these modifications and variations should also be deemed to fall in the protection scope of the claims of the present disclosure.

## Claims

1.   A service life evaluation method for a pitch bearing of a wind turbine, comprising:

acquiring a probability density of a pitch driving torque in M historical periods, wherein M is a positive integer;
acquiring an angle cumulative value of a pitch angle in each of the M historical periods;
determining an equivalent load of the pitch bearing based on the pitch driving torque, the probability density of the pitch driving torque in the M historical periods, and angle cumulative values in the M historical periods; and
determining a consumed service life of the pitch bearing based on the equivalent load of the pitch bearing.

2.   The method according to claim 1, wherein the acquiring the probability density of the pitch driving torque in M historical periods comprises:

determining an occurrence frequency of the pitch driving torque in each of different pitch motion states and a corresponding distribution parameter based on operation data in the M historical periods, wherein the pitch motion states comprises forward state, constant state and backward state; and

determining the probability density based on the occurrence frequencies and the corresponding distribution parameters.

3. The method according to claim 2, wherein the determining the occurrence frequency of the pitch driving torque in each of different pitch motion states and the corresponding distribution parameter based on operation data in the M historical periods comprises:

for each of the historical periods, determining a first column vector based on a product of a correlation coefficient matrix, a first transfer function and an operation data column vector, wherein the number of rows of the correlation coefficient matrix is equal to a sum of the number of occurrence frequencies and the number of corresponding distribution parameters, and the operation data column vector comprises a plurality of items of operation data; determining a sum of the first column vector and a first correlation coefficient column vector, and multiplying the sum of the first column vector and the first correlation coefficient column vector with a second transfer function to obtain a second column vector; and
determining a sum of the second column vector and a second correlation coefficient column vector as an output vector, wherein the output vector comprises the occurrence frequency and the corresponding distribution parameter,
wherein the correlation coefficient matrix, the first correlation coefficient column vector, the second correlation coefficient column vector, the first transfer function and the second transfer function are obtained by testing or training.

4. The method according to claim 2, wherein before determining the occurrence frequency of the pitch driving torque in each of different pitch motion states and the corresponding distribution parameter based on the operation data in the M historical periods, the method further comprises:
collecting operation data of the wind turbine in the M historical periods; wherein the operation data comprises an output power, an impeller rotation speed, a generator torque, a nacelle acceleration x-direction component, a nacelle acceleration y-direction component and a pitch angle.

5. The method according to claim 1, wherein a plurality of pitch driving torques are obtained, wherein the determining the equivalent load of the pitch bearing based on the pitch driving torque, the probability density of the pitch driving torque in the M historical periods, and angle cumulative values in the M historical periods comprises:

for each of the M historical periods, determining a product of an m-th power of each pitch driving torque, the probability density of the pitch driving torque and the angle cumulative value, and calculating a sum of the products corresponding to the plurality of pitch driving torques to obtain a reference load for the historical period, wherein m represents a material Wall coefficient of the pitch bearing;
determining a reference load average value in the M historical periods; and
determining a (1/m)-th power of the reference load average value as the equivalent load of the pitch bearing.

6. The method according to claim 5, wherein the plurality of pitch driving torques are obtained by:
within a pitch driving torque change interval, obtaining the plurality of pitch driving torques based on a set step.

7. The method according to any one of claims 1 to 6, further comprising:

acquiring estimated wind resource parameters of a plurality of wind turbine positions in a target future period, wherein the estimated wind resource parameters comprise estimated wind speeds;
determining probability densities of the pitch driving torque at the estimated wind speeds and an estimated angle cumulative value of the pitch angle in the target future period based on the estimated wind resource parameters;
determining an estimated equivalent load of the pitch bearing in the target future period based on the estimated wind speeds, the pitch driving torque, the probability densities of the pitch driving torque at the estimated wind speeds, and the estimated angle cumulative value at the estimated wind speeds;
determining an estimated service life consumption of the pitch bearing in the target future period based on the estimated equivalent load; and
determining an estimated remaining service life of the pitch bearing based on a designed service life, the consumed service life and the estimated service life consumption of the pitch bearing.

8. The method according to claim 7, wherein the estimated wind resource parameters further comprise a turbulence intensity, a wind shear and an air density.

9. The method according to claim 7, wherein the determining the estimated equivalent load of the pitch bearing in the target future period based on the estimated wind speeds, the pitch driving torque, the probability densities of the pitch driving torque at the estimated wind speeds, and the estimated angle cumulative value at the estimated wind speeds comprises:

   determining the probability densities of the estimated wind speeds;
   for each of the pitch driving torques at each of the estimated wind speeds, determining a product of the probability density of the estimated wind speed, an m-th power of the pitch driving torque, the probability density of the pitch driving torque and the estimated angle cumulative value, and calculating a sum of the products corresponding to the pitch driving torques at the estimated wind speeds to obtain an estimated reference load, wherein m represents a material Wall coefficient of the pitch bearing; and
   determining a $(1/m)$-th power of the estimated reference load as the estimated equivalent load.

10. A service life evaluation device for a pitch bearing of a wind turbine, comprising:

   a first acquisition unit (401,501) configured to acquire a probability density of a pitch driving torque in M historical periods, and acquire an angle cumulative value of a pitch angle in each of the M historical periods, wherein M is a positive integer;
   an equivalent unit (402,502) configured to determine an equivalent load of the pitch bearing based on the pitch driving torque, the probability density of the pitch driving torque in the M historical periods, and angle cumulative values in the M historical periods; and
   a first calculation unit (403,503) configured to determine a consumed service life of the pitch bearing based on the equivalent load of the pitch bearing.

11. The device according to claim 10, wherein the first acquisition unit is further configured to:

   determine an occurrence frequency of the pitch driving torque in each of different pitch motion states and a corresponding distribution parameter based on operation data in the M historical periods, wherein the pitch motion states comprise forward state, constant state and backward state; and
   determine the probability density based on the occurrence frequencies and the corresponding distribution parameters.

12. The device according to claim 11, wherein the first acquisition unit is further configured to:

   for each of the historical periods, determine a first column vector based on a product of a correlation coefficient matrix, a first transfer function and an operation data column vector, wherein the number of rows of the correlation coefficient matrix is equal to a sum of the number of occurrence frequencies and the number of corresponding distribution parameters, and the operation data column vector comprises a plurality of items of operation data;
   determine a sum of the first column vector and a first correlation coefficient column vector, and multiply the sum of the first column vector and the first correlation coefficient column vector with a second transfer function to obtain a second column vector; and
   determine a sum of the second column vector and a second correlation coefficient column vector as an output vector, wherein the output vector comprises the occurrence frequency and the corresponding distribution parameter,
   wherein the correlation coefficient matrix, the first correlation coefficient column vector, the second correlation coefficient column vector, the first transfer function and the second transfer function are obtained by testing or training.

13. The device according to claim 11, wherein the first acquisition unit is further configured to:
   collect operation data of the wind turbine in the M historical periods; wherein the operation data comprises an output power, an impeller rotation speed, a generator torque, a nacelle acceleration x-direction component, a nacelle acceleration y-direction component and a pitch angle.

14. A computer-readable storage medium, wherein instructions in the computer-readable storage medium, when executed by at least one processor, cause the at least one processor to perform the method according to any one of claims 1 to 9.

15. A computer apparatus, comprising:

at least one processor; and
at least one memory configured to store computer-executable instructions,
wherein the computer-executable instructions, when executed by the at least one processor, cause the at least one processor to perform the method according to any one of claims 1 to 9.

**Patentansprüche**

1. Verfahren zur Bewertung der Lebensdauer eines Pitchlagers einer Windturbine, umfassend:

   Ermitteln einer Wahrscheinlichkeitsdichte eines Pitchantriebsmoments in M historischen Zeiträumen, wobei M eine positive ganze Zahl ist;
   Ermitteln eines Winkelkumulationswerts eines Pitchwinkels in jedem der M historischen Zeiträume;
   Bestimmen einer äquivalenten Belastung des Pitchlagers auf der Grundlage des Pitchantriebsmoments, der Wahrscheinlichkeitsdichte des Pitchantriebsmoments in den M historischen Zeiträumen und der Winkelkumulationswerte in den M historischen Zeiträumen; und
   Bestimmen einer verbrauchten Lebensdauer des Pitchlagers auf der Grundlage der äquivalenten Belastung des Pitchlagers.

2. Verfahren nach Anspruch 1, wobei das Ermitteln der Wahrscheinlichkeitsdichte des Pitchantriebsmoments in M historischen Zeiträumen Folgendes umfasst:

   Bestimmen einer Auftrittshäufigkeit des Pitchantriebsmoments in jedem verschiedener Pitchbewegungszustände und eines entsprechenden Verteilungsparameters auf der Grundlage von Betriebsdaten in den M historischen Zeiträumen, wobei die Pitchbewegungszustände einen Vorwärtszustand, einen konstanten Zustand und einen Rückwärtszustand umfassen; und
   Bestimmen der Wahrscheinlichkeitsdichte auf der Grundlage der Auftrittshäufigkeiten und der entsprechenden Verteilungsparameter.

3. Verfahren nach Anspruch 2, wobei das Bestimmen der Auftrittshäufigkeit des Pitchantriebsmoments in jedem der verschiedenen Pitchbewegungszustände und des entsprechenden Verteilungsparameters auf der Grundlage von Betriebsdaten in den M historischen Zeiträumen Folgendes umfasst:

   Bestimmen eines ersten Spaltenvektors auf der Grundlage eines Produkts aus einer Korrelationskoeffizientenmatrix, einer ersten Übertragungsfunktion und einem Betriebsdaten-Spaltenvektor für jede der historischen Zeiträume, wobei die Anzahl der Zeilen der Korrelationskoeffizientenmatrix gleich einer Summe der Anzahl der Auftrittshäufigkeiten und der Anzahl der entsprechenden Verteilungsparameter ist und der Betriebsdaten-Spaltenvektor mehrere Betriebsdatenelemente umfasst;
   Bestimmen einer Summe des ersten Spaltenvektors und eines ersten Korrelationskoeffizienten-Spaltenvektors und Multiplizieren der Summe des ersten Spaltenvektors und des ersten Korrelationskoeffizienten-Spaltenvektors mit einer zweiten Übertragungsfunktion, um einen zweiten Spaltenvektor zu erhalten; und
   Bestimmen einer Summe des zweiten Spaltenvektors und eines zweiten Korrelationskoeffizienten-Spaltenvektors als Ausgangsvektor, wobei der Ausgangsvektor die Auftrittshäufigkeit und den entsprechenden Verteilungsparameter umfasst,
   wobei die Korrelationskoeffizientenmatrix, der erste Korrelationskoeffizienten-Spaltenvektor, der zweite Korrelationskoeffizienten-Spaltenvektor, die erste Übertragungsfunktion und die zweite Übertragungsfunktion durch Testen oder Trainieren erhalten werden.

4. Verfahren nach Anspruch 2, wobei vor der Bestimmung der Auftrittshäufigkeit des Pitchantriebsmoments in jedem der verschiedenen Pitchbewegungszustände und des entsprechenden Verteilungsparameters auf der Grundlage der Betriebsdaten in den M historischen Zeiträumen das Verfahren ferner Folgendes umfasst:
   Sammeln von Betriebsdaten der Windturbine in den M historischen Zeiträumen; wobei die Betriebsdaten eine Ausgangsleistung, eine Rotationsgeschwindigkeit des Laufrads, ein Generatormoment, eine Beschleunigungskomponente der Gondel in x-Richtung, eine Beschleunigungskomponente der Gondel in y-Richtung und einen Pitchwinkel umfassen.

5. Verfahren nach Anspruch 1, wobei mehrere Pitchantriebsmomente erhalten werden, wobei das Bestimmen der äquivalenten Belastung des Pitchlagers auf der Grundlage des Pitchantriebsmoments, der Wahrscheinlichkeitsdichte des Pitchantriebsmoments in den M historischen Zeiträumen und der Winkelkumulationswerte in den M historischen Zeiträumen Folgendes umfasst:

für jeden der M historischen Zeiträume, Bestimmen eines Produkts aus einer m-ten Potenz jedes Pitchantriebsmoments, der Wahrscheinlichkeitsdichte des Pitchantriebsmoments und dem Winkelkumulationswert und Berechnen einer Summe der Produkte, die den mehreren Pitchantriebsmomenten entsprechen, um eine Referenzbelastung für den historischen Zeitraum zu erhalten, wobei m einen Materialwandkoeffizienten des Pitchlagers darstellt;
Bestimmen eines Referenzbelastungs-Durchschnittswerts in den M historischen Zeiträumen; und
Bestimmen einer (l/m)-ten Potenz des Referenzbelastungs-Durchschnittswerts als die äquivalente Belastung des Pitchlagers.

6. Verfahren nach Anspruch 5, wobei die mehreren Pitchantriebsmomente erhalten werden durch:
Erhalten der mehreren Pitchantriebsmomente innerhalb eines Pitchantriebsmoment-Änderungsintervalls auf der Grundlage eines festgelegten Schritts.

7. Verfahren nach einem der Ansprüche 1 bis 6, umfassend ferner:

Ermitteln geschätzter Windressourcenparameter mehrerer Windturbinenpositionen in einem zukünftigen Zielzeitraum, wobei die geschätzten Windressourcenparameter geschätzte Windgeschwindigkeiten umfassen;
Bestimmen von Wahrscheinlichkeitsdichten des Pitchantriebsmoments bei den geschätzten Windgeschwindigkeiten und eines geschätzten Winkelkumulationswerts des Pitchwinkels im zukünftigen Zielzeitraum auf der Grundlage der geschätzten Windressourcenparameter;
Bestimmen einer geschätzten äquivalenten Belastung des Pitchlagers in dem zukünftigen Zielzeitraum auf der Grundlage der geschätzten Windgeschwindigkeiten, des Pitchantriebsmoments, der Wahrscheinlichkeitsdichten des Pitchantriebsmoments bei den geschätzten Windgeschwindigkeiten und des geschätzten Winkelkumulationswerts bei den geschätzten Windgeschwindigkeiten;
Bestimmen eines geschätzten Lebensdauerverbrauchs des Pitchlagers im zukünftigen Zielzeitraum auf der Grundlage der geschätzten äquivalenten Belastung; und
Bestimmen einer geschätzten Restlebensdauer des Pitchlagers auf der Grundlage einer gestalteten Lebensdauer, der verbrauchten Lebensdauer und des geschätzten Lebensdauerverbrauchs des Pitchlagers.

8. Verfahren nach Anspruch 7, wobei die geschätzten Windressourcenparameter ferner eine Turbulenzintensität, eine Windscherung und eine Luftdichte umfassen.

9. Verfahren nach Anspruch 7, wobei das Bestimmen der geschätzten äquivalenten Belastung des Pitchlagers im zukünftigen Zielzeitraum auf der Grundlage der geschätzten Windgeschwindigkeiten, des Pitchantriebsmoments, der Wahrscheinlichkeitsdichten des Pitchantriebsmoments bei den geschätzten Windgeschwindigkeiten und des geschätzten Winkelkumulationswerts bei den geschätzten Windgeschwindigkeiten Folgendes umfasst:

Bestimmen der Wahrscheinlichkeitsdichten der geschätzten Windgeschwindigkeiten;
für jedes der Pitchantriebsmomente bei jeder der geschätzten Windgeschwindigkeiten, Bestimmen eines Produkts aus der Wahrscheinlichkeitsdichte der geschätzten Windgeschwindigkeit, einer m-ten Potenz des Pitchantriebsmoments, der Wahrscheinlichkeitsdichte des Pitchantriebsmoments und dem geschätzten Winkelkumulationswert und Berechnen einer Summe der Produkte, die den Pitchantriebsmomenten bei den geschätzten Windgeschwindigkeiten entsprechen, um eine geschätzte Referenzbelastung zu erhalten, wobei m einen Materialwandkoeffizienten des Pitchlagers darstellt; und
Bestimmen einer (l/m)-ten Potenz der geschätzten Referenzbelastung als die geschätzte äquivalente Belastung.

10. Vorrichtung zur Bewertung der Lebensdauer eines Pitchlagers einer Windturbine, umfassend:

eine erste Ermittlungseinheit (401, 501),
die dazu konfiguriert ist, eine Wahrscheinlichkeitsdichte eines Pitchantriebsmoments in M historischen Zeiträumen und einen Winkelkumulationswert eines Pitchwinkels in jedem der M historischen Zeiträume zu ermitteln, wobei M eine positive ganze Zahl ist;
eine Äquivalenzeinheit (402, 502),
die dazu konfiguriert ist, eine äquivalente Belastung des Pitchlagers auf der Grundlage
des Pitchantriebsmoments, der Wahrscheinlichkeitsdichte des Pitchantriebsmoments in den M historischen Zeiträumen und der Winkelkumulationswerte in den M historischen Zeiträumen zu bestimmen; und
eine erste Berechnungseinheit (403, 503),
die dazu konfiguriert ist, eine verbrauchte Lebensdauer des Pitchlagers auf der Grundlage der äquivalenten Belastung des Pitchlagers zu bestimmen.

11. Vorrichtung nach Anspruch 10, wobei die erste Ermittlungseinheit ferner dazu konfiguriert ist,

eine Auftrittshäufigkeit des Pitchsantriebsmoments in jedem verschiedener Pitchbewegungszustände und einen entsprechenden Verteilungsparameter auf der Grundlage von Betriebsdaten in den M historischen Zeiträumen zu bestimmen, wobei die Pitchbewegungszustände einen Vorwärtszustand, einen konstanten Zustand und einen Rückwärtszustand umfassen; und
die Wahrscheinlichkeitsdichte auf der Grundlage der Auftrittshäufigkeiten und der entsprechenden Verteilungsparameter zu bestimmen.

12. Vorrichtung nach Anspruch 11, wobei die erste Ermittlungseinheit ferner dazu konfiguriert ist,

für jeden der historischen Zeiträume einen ersten Spaltenvektor auf der Grundlage eines Produkts aus einer Korrelationskoeffizientenmatrix, einer ersten Übertragungsfunktion und einem Betriebsdaten-Spaltenvektor zu bestimmen, wobei die Anzahl der Zeilen der Korrelationskoeffizientenmatrix gleich einer Summe der Anzahl der Auftrittshäufigkeiten und der Anzahl der entsprechenden Verteilungsparameter ist und der Betriebsdaten-Spaltenvektor mehrere Betriebsdatenelemente umfasst;
eine Summe des ersten Spaltenvektors und eines ersten Korrelationskoeffizienten-Spaltenvektors zu bestimmen und die Summe des ersten Spaltenvektors und des ersten Korrelationskoeffizienten-Spaltenvektors mit einer zweiten Übertragungsfunktion zu multiplizieren, um einen zweiten Spaltenvektor zu erhalten; und
eine Summe des zweiten Spaltenvektors und eines zweiten Korrelationskoeffizienten-Spaltenvektors als Ausgangsvektor zu bestimmen, wobei der Ausgangsvektor die Auftrittshäufigkeit und den entsprechenden Verteilungsparameter umfasst,
wobei die Korrelationskoeffizientenmatrix, der erste Korrelationskoeffizienten-Spaltenvektor, der zweite Korrelationskoeffizienten-Spaltenvektor, die erste Übertragungsfunktion und die zweite Übertragungsfunktion durch Testen oder Trainieren erhalten werden.

13. Vorrichtung nach Anspruch 11, wobei die erste Ermittlungseinheit ferner dazu konfiguriert ist,
Betriebsdaten der Windturbine in den M historischen Zeiträumen zu sammeln; wobei die Betriebsdaten eine Ausgangsleistung, eine Rotationsgeschwindigkeit des Laufrads, ein Generatormoment, eine Beschleunigungskomponente der Gondel in x-Richtung, eine Beschleunigungskomponente der Gondel in y-Richtung und einen Pitchwinkel umfassen.

14. Computerlesbares Speichermedium, wobei Befehle in dem computerlesbaren Speichermedium, wenn sie von mindestens einem Prozessor ausgeführt werden, den mindestens einen Prozessor dazu veranlassen, das Verfahren nach einem der Ansprüche 1 bis 9 auszuführen.

15. Computergerät, umfassend:

mindestens einen Prozessor; und
mindestens einen Speicher, der zum Speichern computerausführbarer Befehlen konfiguriert ist,
wobei die computerausführbaren Befehle, wenn sie von dem mindestens einen Prozessor ausgeführt werden, den mindestens einen Prozessor dazu veranlassen, das Verfahren nach einem der Ansprüche 1 bis 9 auszuführen.

**Revendications**

1. Procédé d'évaluation d'une durée de vie pour un palier de pas d'une éolienne, consistant à :

acquérir une densité de probabilité d'un couple d'entraînement de pas dans M périodes historiques, dans lequel M est un nombre entier positif ;
acquérir une valeur cumulative d'angle d'un angle de pas dans chacune des M périodes historiques ;
déterminer une charge équivalente du palier de pas sur la base du couple d'entraînement de pas, la densité de probabilité du couple d'entraînement de pas dans les M périodes historiques et une valeur cumulative d'angle dans les M périodes historique ; et

déterminer une durée de vie consommée du palier de pas sur la base de la charge équivalente du palier de pas.

2. Procédé selon la revendication 1, dans lequel l'acquisition de la densité de probabilité du couple d'entraînement de pas dans les M périodes historiques consiste à :

déterminer une fréquence de survenance du couple d'entraînement de pas dans chacune de différents états de mouvements du pas et un paramètre de distribution correspondant en fonction de données de fonctionnement dans les M périodes historiques, dans lequel les états de mouvements du pas comprennent un état en avant, un état constant et un état en arrière ; et

déterminer la densité de probabilité en fonction des fréquences de survenance et des paramètres de distribution correspondants.

3. Procédé selon la revendication 2, dans lequel la détermination de la fréquence de survenance du couple d'entraînement de pas dans chacun des différents états de mouvements du pas et le paramètre de distribution correspondant en fonction de données de fonctionnement dans les M périodes historiques consiste à :

pour chacune des périodes historiques, déterminer un premier vecteur colonne sur la base d'un produit d'une matrice de coefficient de corrélation, d'une première fonction de transfert et d'un vecteur colonne de données de fonctionnement, dans lequel le nombre de lignes de la matrice de coefficient de corrélation est égal à une somme du nombre de fréquences de survenance et du nombre des paramètres de distribution correspondants, et le vecteur colonne de données de fonctionnement comprend une pluralité d'éléments de données de fonctionnement ;

déterminer une somme du premier vecteur colonne et d'un premier vecteur colonne de coefficient de corrélation, et multiplier la somme du premier vecteur colonne et du premier vecteur colonne de coefficient de corrélation par une seconde fonction de transfert pour obtenir un second vecteur colonne ; et

déterminer une somme du second vecteur colonne et d'un seconde vecteur colonne de coefficient de corrélation comme un vecteur de sortie, dans lequel le vecteur de sortie comprend la fréquence de survenance et le paramètre de distribution correspondant,

dans lequel la matrice de coefficient de corrélation, le premier vecteur colonne de coefficient de corrélation, le second vecteur colonne de coefficient de corrélation, la première fonction de transfert et la seconde fonction de transfert sont obtenus par tests ou entraînements.

4. Procédé selon la revendication 2, dans lequel avant de déterminer la fréquence de survenance du couple d'entraînement de pas dans chacun des différents états de mouvements du pas et le paramètre de distribution correspondant en fonction de données de fonctionnement, le procédé consiste en outre à :
recueillir des données de fonctionnement de l'éolienne dans les M périodes historiques ; dans lequel les données de fonctionnement comprennent une puissance de sortie, une vitesse de rotation de tribune, un couple de générateur, un composant d'accélération d'une nacelle dans une direction x, un composant d'accélération d'une nacelle dans une direction y et un angle de pas.

5. Procédé selon la revendication 1, dans lequel une pluralité de couples d'entraînement de pas sont obtenus, dans lequel la détermination de la charge équivalente du palier de pas sur la base du couple d'entraînement de pas, de la densité de probabilité du couple d'entraînement de pas dans les M périodes historiques, et des valeurs cumulatives d'angle dans les M périodes historiques consistent à :

pour chacune des M périodes historiques, déterminer un produit d'une m-ième puissance de chaque couple d'entraînement de pas, la densité de probabilité du couple d'entraînement de pas et la valeur cumulative d'angle, et calculer une somme des produits correspondants à la pluralité de couples d'entraînement de pas pour obtenir une charge de référence pour la période historique, dans lequel m représente un coefficient Paroi de matériau du palier de pas ;

déterminer une valeur moyenne de charge de référence dans les M périodes historiques ; et

déterminer une (l/m)-ième puissance de la valeur moyenne de charge de référence comme la charge équivalente du palier de pas.

6. Procédé selon la revendication 5, dans lequel la pluralité de couples d'entraînement de pas sont obtenus par :
à l'intérieur d'un intervalle de changement du couple d'entraînement de pas, obtenir la pluralité de couples d'entraînement de pas sur la base d'un pas défini.

**7.** Procédé selon l'une quelconque des revendications 1 à 6, consistant en outre à :

acquérir des paramètres estimés de ressource éolienne d'une pluralité de positions d'éolienne dans une période au futur cible, dans lequel les paramètres estimés de ressource éolienne comprennent des vitesses éoliennes estimées ;
déterminer des densités de probabilité du couple d'entraînement de pas aux vitesses éoliennes estimées et à une valeur cumulative d'angle estimée de l'angle de pas dans la période au futur cible sur la base des paramètres estimés de ressource éolienne ;
déterminer une charge équivalente estimée du palier de pas dans la période au futur cible en fonction des vitesses éoliennes estimées, le couple d'entraînement de pas, les densités de probabilité du couple d'entraînement de pas aux vitesses éoliennes estimées, et la valeur cumulative d'angle estimée aux vitesses éoliennes estimées ;
déterminer une consommation de durée de vie estimée du palier de pas dans la période au futur cible sur la base de la charge équivalente estimée ; et
déterminer une durée de vie restante estimée du palier de pas en fonction d'une durée de vie désignée, de la durée de vie restante et de la consommation de durée de vie estimée du palier de pas.

**8.** Procédé selon la revendication 7, dans lequel les paramètres estimés de ressource éolienne comprennent en outre une intensité de turbulence, un cisaillement du vent et une masse volumique de l'air.

**9.** Procédé selon la revendication 7, dans lequel la détermination de la charge équivalente estimée du palier de pas dans la période au futur cible en fonction des vitesses éoliennes estimées, du couple d'entraînement de pas, des densités de probabilité du couple d'entraînement de pas aux vitesses éoliennes estimées, et de la valeur cumulative d'angle estimée aux vitesses éoliennes estimées consiste à :

déterminer les densités de probabilité des vitesses éoliennes estimées ;
pour chacun des couples d'entraînement de pas à chacune des vitesses éoliennes estimées, déterminer un produit de la densité de probabilité de la vitesse éolienne estimée, une m-ième puissance du couple d'entraînement de pas, la densité de probabilité du couple d'entraînement de pas et la valeur cumulative d'angle estimée, et calculer une somme des produits correspondants aux couples d'entraînement de pas aux vitesses éoliennes estimées pour obtenir une charge de référence estimée, dans lequel m représente un coefficient Paroi de matériau du palier de pas ; et
déterminer une (l/m)-ième puissance de la charge de référence estimée comme la charge équivalente estimée.

**10.** Dispositif d'évaluation d'une durée de vie pour un palier de pas d'une éolienne, comprenant :

une première unité d'acquisition (401, 501)
configurée pour acquérir une densité de probabilité d'un couple d'entraînement de pas dans M périodes historiques ; et acquérir une valeur cumulative d'angle d'un angle de pas dans chacune des M périodes historiques, dans lequel M est un nombre entier positif ;
une unité équivalente (402, 502)
configurée pour déterminer une charge équivalente du palier de pas sur la base du couple d'entraînement de pas, de la densité de probabilité du couple d'entraînement de pas dans les M périodes historiques, et des valeur cumulative d'angle dans les M périodes historiques ; et
une première unité de calcul (403, 503)
configurée pour déterminer une durée de vie consommée du palier de pas sur la base de la charge équivalente du palier de pas.

**11.** Dispositif selon la revendication 10, dans lequel la première unité d'acquisition est configurée en outre pour :

déterminer une fréquence de survenance du couple d'entraînement de pas dans chacune de différents états de mouvements du pas et un paramètre de distribution correspondant en fonction de données de fonctionnement dans les M périodes historiques, dans lequel les états de mouvements du pas comprennent un état en avant, un état constant et un état en arrière ; et
déterminer la densité de probabilité en fonction des fréquences de survenance et des paramètres de distribution correspondants.

**12.** Dispositif selon la revendication 11, dans lequel la première unité d'acquisition est configurée en outre pour :

pour chacune des périodes historiques, déterminer un premier vecteur colonne sur la base d'un produit d'une matrice de coefficient de corrélation, d'une première fonction de transfert et d'un vecteur colonne de données de fonctionnement, dans lequel le nombre des lignes de la matrice de coefficient de corrélation est égal à une somme du nombre de fréquences de survenance et du nombre des paramètres de distribution correspondants, et le vecteur colonne de données de fonctionnement comprend une pluralité d'éléments des données de fonctionnement ;

déterminer une somme du premier vecteur colonne et d'un premier vecteur colonne de coefficient de corrélation, et multiplier la somme du premier vecteur colonne et du premier vecteur colonne de coefficient de corrélation par une seconde fonction de transfert pour obtenir un second vecteur colonne ; et

déterminer une somme du second vecteur colonne et d'un seconde vecteur colonne de coefficient de corrélation comme un vecteur de sortie, dans lequel le vecteur de sortie comprend la fréquence de survenance et le paramètre de distribution correspondant,

dans lequel la matrice de coefficient de corrélation, le premier vecteur colonne de coefficient de corrélation, le second vecteur colonne de coefficient de corrélation, la première fonction de transfert et la seconde fonction de transfert sont obtenus par tests ou entraînements.

**13.** Dispositif selon la revendication 11, dans lequel la première unité d'acquisition est configurée en outre pour : recueillir des données de fonctionnement de l'éolienne dans les M périodes historiques ; dans lequel les données de fonctionnement comprennent une puissance de sortie, une vitesse de rotation de tribune, un couple de générateur, un composant d'accélération d'une nacelle dans une direction x, un composant d'accélération d'une nacelle dans une direction y et un angle de pas.

**14.** Support de stockage lisible par ordinateur, dans lequel des instructions dans le support de stockage lisible par ordinateur, lorsqu'elles sont exécutées par au moins un processeur, amènent l'au moins un processeur à effectuer le procédé selon l'une quelconque des revendications 1 à 9.

**15.** Appareil informatique, comprenant :

au moins un processeur ; et
au moins une mémoire configurée pour stocker des instructions exécutables par ordinateur,
dans lequel les instructions exécutables par ordinateur, lorsqu'elles sont exécutées par l'au moins un processeur, amènent l'au moins un processeur à effectuer le procédé selon l'une quelconque des revendications 1 à 9.

Probability density of a pitch driving torque in M historical periods is acquired   S101

An angle cumulative value of a pitch angle in each of the M historical periods is acquired   S102

An equivalent load of the pitch bearing is determined based on the pitch driving torque, the probability density of the pitch driving torque in the M historical periods, and angle cumulative values in the M historical periods   S103

A consumed service life of the pitch bearing is determined based on the equivalent load of the pitch bearing   S104

**Figure 1**

**Figure 2**

Consumed service life of the pitch bearing

Pitch bearing consumed service life evaluation module

Cumulative pitch module

Pitch driving torque distribution estimation module

Data collection system

Power[pwr]

Rotation speed[r]

Torque[T]

Acceleration x/y[a_x/a_y]

Pitch angle[pA]

Wind turbine generator system

**Figure 3**

400

| First acquisition unit | 401 | Equivalent unit | 402 |

| First calculation unit | 403 |

**Figure 4**

500

| First acquisition unit | 501 | Second acquisition unit | 504 |

| Equivalent unit | 502 | Determination unit | 505 |

| First calculation unit | 503 | Estimation unit | 506 |

| Second calculation unit | 507 |

**Figure 5**

600

| Memory | 601 |

| Processor | 603 |

**Figure 6**

**EP 4 343 587 B1**

**Patent documents cited in the description**

- US 2015167637 A1
- US 2019048849 A1
- CN 113623142 A